# EUROPEAN PATENT APPLICATION

(11) **EP 4 372 761 A1**
(43) Date of publication of application: **22.05.2024**
(21) Application number: 22275145.5
(22) Date of filing: 17.11.2022
(51) Int. Cl.: G21C 3/02, G21C 7/08

(54) **FUEL ASSEMBLY FOR A REACTOR**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A fuel assembly (100) for a nuclear fission reactor (10). The fuel assembly (100) is centred on a longitudinal axis (102). The fuel assembly (100) comprises a fuel compact (200) which defines a flow passage (202) running from a flow inlet (204) provided at a first end (206) of the fuel compact (200) to a flow outlet (208) provided at a second end (210) of the fuel compact (200). The flow passage (202) defines an internal surface (222) of the fuel compact (200). A displacer element (300) is provided in the passage (202) and mounted such that a clearance (212) is maintained between the internal surface (222) of the fuel compact (200) and the displacer element (300) to define an annular coolant flow passage (230).

## Description

### FIELD

The present disclosure relates to fuel assembly for a nuclear fission reactor.

### BACKGROUND

Controlling the operating temperature, and temperature distribution within, a nuclear reactor core is essential for longevity of the system and overall safe running of the arrangement.

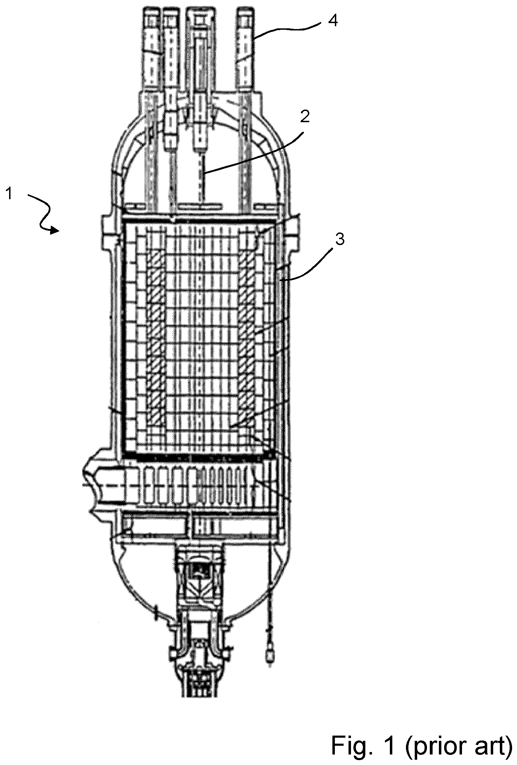

Conventionally a reactor core comprises multiple passages, some configured for receiving nuclear fuel rods, some for neutron moderators and some for cooling flow. A neutron moderator is a medium that reduces the speed of fast neutrons from the fuel rods, ideally without capturing any, leaving them as thermal neutrons with only minimal (thermal) kinetic energy. By way of illustration, an example of a graphite moderated nuclear fission reactor 1 (General Atomics GT-MHR) is shown in Figure 1. Common to many designs, this arrangement has traditional straight control rods 2 which must be placed above the reactor vessel 3. As is well known, the control rods must extend into and out of the reactor.

The coolant passages and fuel passages next to each other, but there is no direct contact between coolant and fuel rod, the heat being conducted through reactor core. In other examples the fuel rod is surrounded by a graphite moderator sleeve, and coolant is provided around the outside of the sleeve. In this example there is no direct contact between coolant and fuel rod, the heat being conducted through graphite (moderator) sleeve. Both examples may also provide a high thermal resistance for cooling.

Cooling alone may not be sufficient to obtain an optimum temperature distribution within a reactor core. The power density within a reactor core may be influenced by relative performance of fuel rods and their proximity to other features of the reactor core. A conventional solution to balance the power density profile this problem is to monitor the fuel rods performance and to swap fuel rods between locations during use, or to swap fuel rods in the core with replacement fuel rods. For example, during a maintenance cycle, it may be common to replace about 30% of the fuel rods and move the others around the reactor core to balance out power output. However, such activity requires a complete strip down of the reactor, which is time consuming, hazardous and expensive.

Hence elements of a reactor core and/or the resultant reactor core assembly, which provide enhanced cooling control and a predictable power density throughout the life of the reactor, is highly desirable.

### SUMMARY

According to the present disclosure there is provided apparatus and systems as set forth in the appended claims. Other features of the invention will be apparent from the dependent claims, and the description which follows.

Accordingly there may be provided a fuel assembly (100) for a nuclear fission reactor (10), the fuel assembly (100) centred on a longitudinal axis (102). The fuel assembly (100) may comprise a fuel compact (200) which defines a flow passage (202) running from a flow inlet (204) provided at a first end (206) of the fuel compact (200) to a flow outlet (208) provided at a second end (210) of the fuel compact (200). The flow passage (202) may define an internal surface (222) of the fuel compact (200). A displacer element (300) may be provided in the passage (202) and mounted such that a clearance (212) is maintained between the internal surface (222) of the fuel compact (200) and the displacer element (300) to define an annular coolant flow passage (230).

A spacer element (302) may extend between the fuel compact (200) and the displacer element (300) to locate the displacer element (300) relative to the fuel compact (200) and maintain the clearance (212) therebetween.

The spacer element (302) may be aerofoil shaped with a leading edge (304) directed toward the flow inlet (204) and a trailing edge (306) directed toward a flow outlet (208).

A first spacer element array (310) may be provided at a first position (P1) along the length of the displacer element (300), the first spacer element array (310) comprising at least two spacer elements (302) spaced around the circumference of the displacer element (300).

A second spacer element array (312) may be provided at a second position (P2) spaced apart along the length of the displacer element (300) from the first spacer element array (310).

The first spacer element array (310) may be provided at the first end (206) of the fuel compact (200), and each spacer element (302) of the first spacer element array (310) may be located in a respective recess (232) provided defined by the first end (206) of the fuel compact (200).

The second spacer element array (312) may be provided at the second end (210) of the fuel compact (200), and each spacer element (302) of the second spacer element array (312) may be located in a respective recess (234) defined by the second end (210) of the fuel compact (200).

At least one of the spacer elements (302) of each spacer element array (310, 312) may extend beyond its respective end (206, 210) of the fuel compact (200).

The displacer element (300) may extend from a first end (316) to a second end (318). A first region (340) may extend from the displacer element first end (316) to a second region (342), the first region (340) having a constant first diameter. The second region (342) may extend from the end of the first region (340), the second region (342) increasing in diameter towards a third region (344). The third region (344) may extend from the end of the second region (342) to a fourth region (346), the third region (344) having a constant third diameter. The fourth region (346) may extend from the end of the third region (344), the fourth region (346) decreasing in diameter towards a fifth region (348). The fifth region (348) may extend from the end of the fourth region (346) to the displacer element second end (318), the fifth region (348) having a constant fifth diameter.

The spacer elements (302) of the first spacer element array (310) may extend along the second region (342). The spacer elements (302) of the second spacer element array (312) may extend along the fourth region (346).

There may also be provided a nuclear fission reactor system (10) comprising a nuclear reactor unit (12) having a fuel block (400) with a central axis (402) extending along the length of the fuel block (400). The fuel block (400) may define a fuel assembly chamber (404) which extends from an inlet opening (410) on a first surface (412) of the fuel block (400) to an outlet opening (420) on a second surface (422) of the fuel block (400). The fuel assembly chamber inlet (410) may be operable to be in flow communication with a coolant source (500), and the fuel assembly chamber flow outlet (208) may be operable to be in flow communication with a coolant exhaust (502). A fuel assembly (100) according to the present disclosure may be provided in the fuel element chamber (404).

The fuel assembly chamber (404) may extend from the fuel assembly chamber inlet (410) with a diameter such that there is provided a sliding fit between the fuel assembly (100) and the fuel assembly chamber (404). The fuel assembly chamber (404) may reduce in diameter towards the fuel assembly chamber outlet (420) such that diameter of the fuel assembly chamber flow outlet (420) is less than the diameter of the fuel assembly (100) to thereby prevent the fuel assembly (100) from passing through the fuel assembly chamber flow outlet (420).

A shoulder (460) may define the reduction in diameter of the fuel assembly chamber (404), and the spacer elements (302) may engage with the shoulder (460).

A retaining plug (462) may be provided in the fuel assembly chamber inlet (410), the retaining plug (462) defining part a plug flow passage (464) therethrough with a diameter less than the diameter of the fuel assembly (100) to thereby prevent the fuel assembly (100) from passing through the retaining plug (462).

The spacer elements (302) may engage with the retaining plug (462). The fuel block (400) may define a plurality of fuel assembly chambers (404), a fuel assembly (100) provided in each of the fuel assembly chambers (404), and the annular coolant flow passage (230) of one of the fuel assemblies (212) may have a different flow area to the annular coolant flow passage (230) of at least one of the other fuel assemblies (212).

There may be provided a powerplant for land, air or sea comprising a nuclear fission reactor system (10) according to the present disclosure.

There may be provided a nuclear fission reactor system (10) comprising a nuclear reactor unit (12) having a fuel block (400) with a central axis (402) extending along the length of the fuel block (400) between a first surface (412) and a second surface (422). The fuel block (400) may define a plurality of fuel assembly chambers (404) which extend from an inlet opening (410) on the first surface (412) of the fuel block (400) to an outlet opening (420) on a second surface (422) of the fuel block (400). There may be provided a plurality of fuel assemblies (100). Each fuel assembly (100) may comprise: a fuel compact (200) which defines a flow passage (202) running from a flow inlet (204) provided at a first end (206) of the fuel compact (200) to a flow outlet (208) provided at a second end (210) of the fuel compact (200). The passage (202) may define an internal surface (222) of the fuel compact (200). A displacer element (300) may be provided in the coolant flow passage (202) and mounted such that a clearance (212) is maintained between the internal surface (222) of the fuel compact (200) and the displacer element (300) to define an annular coolant flow passage (230. Each of the plurality of fuel assemblies (100) may be located in a respective one of the plurality of fuel assembly chambers (404). At least one of the fuel assemblies (100) of the plurality of fuel assemblies (100) may be configured to transfer heat to the coolant in its annular coolant flow passage (230) at a first rate. At least one other of the plurality of fuel assemblies (100) may be operable/configured to transfer heat to the coolant in its annular coolant flow passage (230) at a second rate.

The fuel assembly chambers (404) may be evenly distributed in the fuel block (400).

In some regions of the fuel block (400) the fuel assembly chambers (404) may be provided in a greater number per unit volume then in other regions of the fuel block (400).

In a central region of the fuel block (400) the fuel assembly chambers (404) may be provided in a greater number per unit volume then in the remaining region of the fuel block (400).

The annular coolant flow passage (230) of one of the fuel assemblies (212) may have a different flow area to the annular coolant flow passage (230) of at least one of the other fuel assemblies (212).

The annular coolant flow passage (230) of at least one of the fuel assemblies (212) may have a constant flow area along its length.

The annular coolant flow passage (230) of at least one of the fuel assemblies (212) may reduce in flow area along its length.

Heat transfer features (320) may be provided on the displacer element (300). The heat transfer features (320) of one of the fuel assemblies (212) may be configured to transfer heat at a different rate to the heat transfer features of at least one of the other fuel assemblies (212).

The heat transfer features (320) may be provided as a roughened surface of the displacer element (300).

The heat transfer features (320) may be provided as fins, pedestals, axially extending ribs and/or circumferentially extending ribs which extend from the displacer element (300).

At least one of the displacer elements (300) of the plurality of fuel assemblies (100) may comprise a first material and each of the remainder of the displacer elements (300) of the plurality of fuel assemblies (100) may comprise one of a second material, a third material or a fourth material, each of which are different to the first material.

The first material may be a neutron moderator and multiplier.

The first material may be Beryllium oxide.

The second material may be a neutron moderator and absorber material.

The second material may comprise graphite, boron carbide and/or silicon carbide.

The third material may be transparent to neutrons.

The third material may comprise zirconium, zirconium hydride and/or a low neutron capture metal.

The fourth material may be a neutron poison.

The fourth material may comprise boron carbide particles.

The fourth material may comprise boron carbide particles in a graphite matrix.

The fourth material may comprise gadolinium oxide particles.

The fourth material may comprise gadolinium oxide particles in a graphite matrix.

There may also be provided a powerplant for land, air or sea comprising a nuclear fission reactor system (10) according to the present disclosure.

Hence there are provided elements of a reactor core and a reactor core assembly, which provide enhanced cooling control and a predictable power density throughout the life of the reactor.

The solution of the present disclosure solves the problem of managing peaking powers through the reactor core without the cost of variable fuel loadings or complex geometric fuel zone arrangements.

The solution of the present disclosure enables the ability to control coolant flow distribution whilst enhancing heat transfer performance.

The solution of the present disclosure may also enable peak fuel temperatures to remain consistent throughout the life of the reactor core without the need to perform fuel assembly shuffling.

### BRIEF DESCRIPTION OF THE FIGURES

Embodiments of the invention will now be described by way of example only with reference to the figures, in which:
Figure 1 shows an example of a nuclear fission reactor, as described in the background section;
Figure 2 illustrates features of a nuclear fission reactor unit according to the present disclosure;
Figure 3 shows an example of the fuel block of a nuclear fission reactor system according to the present disclosure;
Figure 4 shows an inlet end of a fuel block and fuel assembly according to the present disclosure;
Figure 5 shows an outlet end of a fuel block and fuel assembly according to the present disclosure;
Figure 6 shows an end view of a first example of a fuel block according to the present disclosure;
Figure 7 shows an end view of a second example of a fuel block according to the present disclosure;
Figure 8 shows an example of a displacer element according to the present disclosure;
Figure 9 shows a further example of a displacer element according to the present disclosure; and
Figure 10 shows another example of a displacer element according to the present disclosure.

### DETAILED DESCRIPTION

The present disclosure relates to a fuel assembly 100 for a nuclear fission reactor 10. The present disclosure also relates to a nuclear fission reactor system 10 comprising a nuclear reactor unit 12 having a fuel block 400. The present disclosure also relates to a powerplant for land, air or sea comprising a nuclear fission reactor system 10 according to the present disclosure.

For example, the nuclear fission reactor 10 may be a high temperature gas cooled reactor (HTGR). The system may be a direct cycle design where the reactor core 600 directly heats a working fluid driving a turbine to generate power. The coolant may, for example, be nitrogen. Features of such systems are well known in the art and hence the details are not herein described.

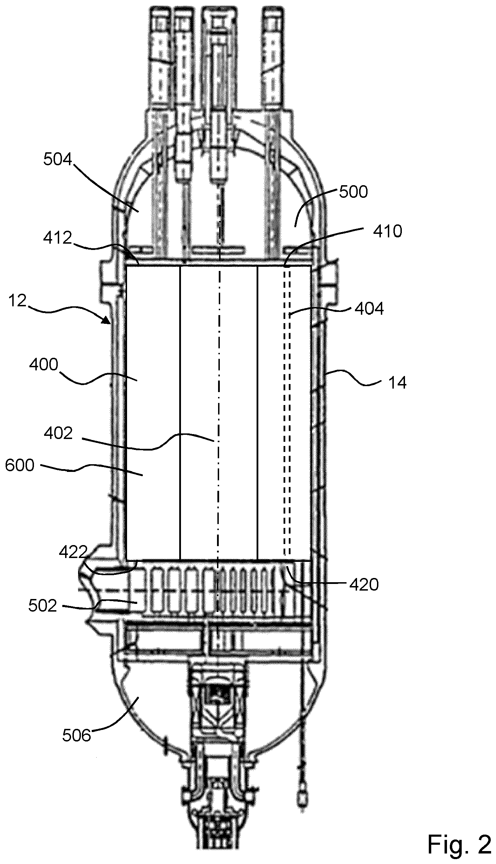

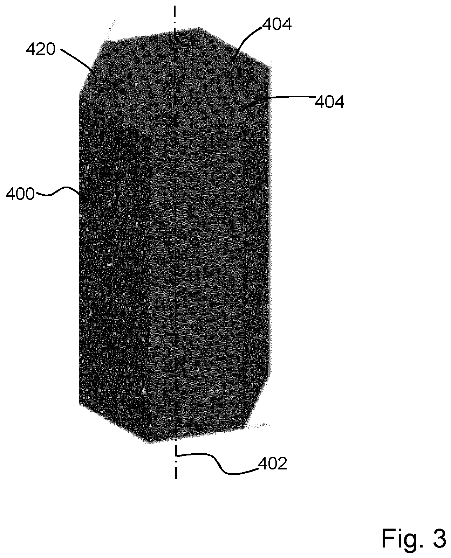

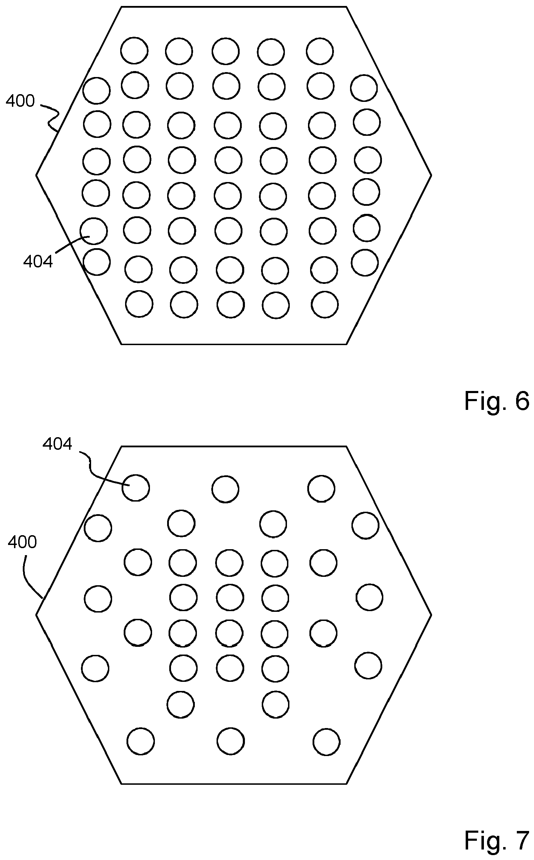

As shown in figure 2, the nuclear fission reactor system 10 of the present disclosure may comprise a nuclear reactor unit 12 having a casing 14 which encloses a fuel block 400. The fuel block 400 has a central axis 402 extending along the length of the fuel block 400. A perspective view of fuel block 400 is shown in figure 3, with end on views of different examples of fuel blocks 400 being shown in figures 6, 7.

The reactor unit 12 may comprise a core 600 made up of one or more fuel blocks 400. The fuel block is shown as a hexagonal prism. However, each fuel block 400 may be of any suitable shape.

The fuel block 400 defines a fuel assembly chamber 404 which extends from an inlet opening 410 on a first surface 412 of the fuel block 400 to an outlet opening 420 on a second surface 422 of the fuel block 400. There may be provided a plurality of fuel assembly chambers 400 (as shown in figures 3, 6, 7). For clarity, a single fuel assembly chamber 400 is shown in figure 2, although the fuel block may define a plurality of fuel assembly chambers 404 (as shown in figures 3, 6, 7).

The fuel block 400 may be made of any suitable conventional material appropriate to the design of the reactor. For thermal spectrum reactors the fuel block 400 must be made of a moderating material with low neutron cross section. Examples include graphite, Beryllium, Beryllium Oxide, and metal hydrides Zirconium hydride Yttrium hydride etc. If a fast spectrum core 600 is utilised the material may be chosen to have a low moderating potential whilst being able to resist high temperatures and radiation flux.

The or each fuel assembly chamber inlet 410 is operable to be in flow communication with a coolant source 500, and the fuel assembly chamber flow outlet 208 is operable to be in flow communication with a coolant exhaust 502.

The coolant source 500 may provide a flow of coolant into a coolant cavity 504 defined by the casing 14 and first surface 412 of the fuel block 400. The coolant exhaust 502 may be in flow communication with an exhaust cavity 506 defined by the casing 14 and second surface 422 of the fuel block 400. Hence coolant may flow into the coolant cavity 504 before entering the fuel block 400, and exit the fuel block 400 into the exhaust cavity 506.

A fuel assembly 100 is provided in the or each fuel assembly chamber 404.

For the avoidance of doubt, other features of the nuclear fission reactor system (for example heat exchangers, turbines etc) are not shown in the figures.

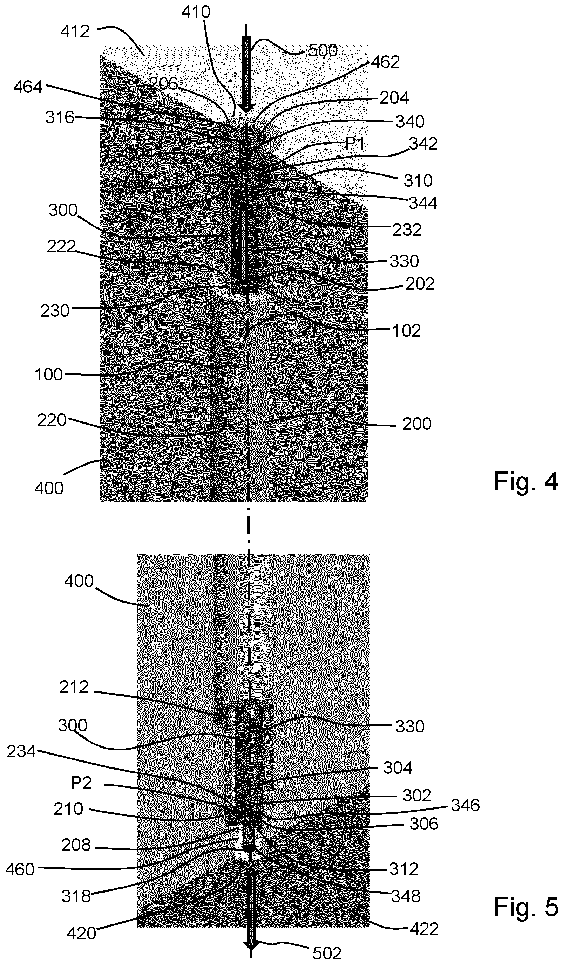

As shown in figures 4, 5 each fuel assembly 100 is centred on a longitudinal axis 102. Each fuel assembly 100 comprises a fuel compact 200 which defines a flow passage 202 running from a flow inlet 204 provided at a first end 206 of the fuel compact 200 to a flow outlet 208 provided at a second end 210 of the fuel compact 200. The fuel compact 200 has an external surface 220. The flow passage 202 defines an internal surface 222 of the fuel compact 200.

A displacer element 300 is provided in the passage 202. The displacer element 300 may be centred on the longitudinal axis 102. The displacer element 300 may be mounted such that a clearance 212 is maintained between the internal surface 222 of the fuel compact 200 and the displacer element 300 to define an annular coolant flow passage 230.

As shown in figures 4, 5, the displacer element 300 may comprise a central cylindrical body 330 which extends from a first end 316 to a second end 318. A first region 340 of the displacer element 300 may extend from the displacer element first end 316 to a second region 342, the first region 340 having a constant first diameter. The second region 342 may extend from the end of the first region 340, the second region 342 increasing in diameter towards a third region 344. That is to say, the second region 342 may be frustoconical. The third region 344 may extend from the end of the second region 342 to a fourth region 346, the third region 344 having a constant third diameter. The fourth region 346 may extend from the end of the third region 344, the fourth region 346 decreasing in diameter towards a fifth region 348. That is to say, the fourth region 346 may be frustoconical. The fifth region 348 may extend from the end of the fourth region 346 to the displacer element second end 318, the fifth region 348 having a constant fifth diameter.

The fuel compact may comprise conventional fissionable materials. In one example the fuel compact may comprise TRISO fuel particles embedded into a graphite matrix.

A spacer element 302 may extend between the fuel compact 200 and the displacer element 300 to locate the displacer element 300 relative to the fuel compact 200 and maintain the clearance 212 therebetween. The spacer element 302 may be integral with the displacer element 300. Alternatively the spacer element may be fabricated separately and then joined to the main body 330 of the displacer element 300.

The spacer element 302 may be aerofoil shaped with a leading edge 304 directed toward the flow inlet 204 and a trailing edge 306 directed toward a flow outlet 208.

As shown in figures 4, 5 a first spacer element array 310 may be provided at a first position P1 along the length of the displacer element 300. The first spacer element array 310 may comprise at least two spacer elements 302 spaced around the circumference of the displacer element 300.

A second spacer element array 312 may be provided at a second position P2 spaced apart along the length of the displacer element 300 from the first spacer element array 310. That is, the second position P2 may be spaced apart along the length of the displacer element 300 from first position P1.

The first spacer element array 310 may be provided at the first end 206 of the fuel compact 200. Each spacer element 302 of the first spacer element array 310 may be located in a respective recess 232 provided defined by the first end 206 of the fuel compact 200.

The second spacer element array 312 may be provided at the second end 210 of the fuel compact 200, and each spacer element 302 of the second spacer element array 312 may be located in a respective recess 234 defined by the second end 210 of the fuel compact 200.

At least one of the spacer elements 302 of each spacer element array 310, 312 may extend beyond its respective end 206, 210 of the fuel compact 200.

The spacer elements 302 of the first spacer element array 310 may extend along from the second region 342 of the displacer element 300. The spacer elements 302 of the second spacer element array 312 may extend along from the fourth region 346 of the displacer element 300.

The fuel assembly chamber 404 may extend from the fuel assembly chamber inlet 410 with a diameter such that there is provided a sliding fit between the fuel assembly 100 and the fuel assembly chamber 404. The fuel assembly chamber 404 may reduce in diameter towards the fuel assembly chamber outlet 420 such that diameter of the fuel assembly chamber flow outlet 420 is less than the diameter of the fuel assembly 100. Hence the restriction provided by the fuel assembly chamber flow outlet 420 prevent the fuel assembly 100 from passing through the fuel assembly chamber flow outlet 420. A shoulder 460 may define the reduction in diameter of the fuel assembly chamber 404, and the spacer elements 302 may engage with the shoulder 460.

A retaining plug 462 may be provided in the fuel assembly chamber inlet 410. The retaining plug 462 may define part a plug flow passage 464 therethrough with a diameter less than the diameter of the fuel assembly 100 to thereby prevent the fuel assembly 100 from passing through the flow passage 464 of the retaining plug 462. The spacer elements 302 may engage with the retaining plug 462.

In examples in which a plurality of fuel assembly chambers 404 is provided in a reactor core 600, one of a plurality of fuel assemblies 100 may be located in a respective one of a plurality of fuel assembly chambers 404. In an example, the plurality of fuel assemblies 100 may all be essentially identical.

In other examples in which a plurality of fuel assemblies 100 are provided, at least one of the fuel assemblies 100 of the plurality of fuel assemblies 100 is configured (i.e. operable) to transfer heat to the coolant in (i.e. passing through) its respective annular coolant flow passage 230 at a first rate, and at least one other of the plurality of fuel assemblies 100 is configured (i.e. operable) to transfer heat to the coolant in its respective annular coolant flow passage 230 at a second rate.

Figure 6 shows a cross-sectional (or end) view of one example of a fuel block 400. This illustrates an example in which the fuel assembly chambers 404 are evenly distributed in the fuel block 400.

In other examples, some regions of the fuel block 400 the fuel assembly chambers 404 are provided in a greater number per unit volume then in other regions of the fuel block 400.

Figure 7 shows a cross-sectional (or end) view of different example of a fuel block 400. In this example, in a central region of the fuel block 400 (i.e. a region extending radially from the central axis 402 along the length of the fuel block 400) the fuel assembly chambers 404 are provided in a greater number per unit volume then in the remaining region of the fuel block 400.

The annular coolant flow passage 230 of one of the fuel assemblies 100 may be provided with a different flow area to the annular coolant flow passage 230 of at least one of the other fuel assemblies 100 to thereby provide a set of fuel assemblies 100 which have different annular coolant flow rates. For example the diameter of the third region 344 of a first displacer element 300 in a first fuel assembly 100 may be different to the diameter of the third region 344 of a second displacer element 300 in a second fuel assembly 100.

As shown in the example of figures 4, 5, the annular coolant flow passage 230 of at least one of the fuel assemblies 100 of the nuclear fission reactor system 10 may have a constant flow area along its length.

In another example, the annular coolant flow passage 230 of at least one of the fuel assemblies 100 of the nuclear fission reactor system 10 may reduce in flow area along its length. For example the flow passage 202 of the fuel compact 200 may decrease in diameter along its length, from the inlet 204 to the outlet 208 and/or the displacer element 300 may increase in diameter along its length from the inlet 204 to the outlet 208.

Displacer elements 300 of the fuel assemblies 100 of the nuclear fission reactor system 10 may be provided with different diameters to provide fuel assemblies 100 operable to each limit mass flow to different values.

Displacer elements 300 of the fuel assemblies 100 of the nuclear fission reactor system 10 may be provided with different lengths to provide fuel assemblies 100 operable to each limit mass flow to different values.

Both enable an optimised coolant mass flow distribution to be generated whereby the coolant mass flow through each fuel assembly 100 is configured using the displacer element until the outlet coolant temperature is even across the fuel block 400 and or core 600 despite varying thermal power output of each fuel compact 200. The displacer element 300 increases the heat transfer surface area as heat is radiated off the fuel compact 200 heating the displacer element 300 which can then also transfer heat to the coolant.

Heat transfer features 320 may be provided as part of the displacer element 300. That is to say, heat transfer features 320 may extend from the central body 330 of the displacer element 300. The spacer element 302 may be provided as a heat transfer feature 320. The heat transfer features 320 of one of the fuel assemblies 100 configured to transfer heat at a different rate to the heat transfer features of at least one of the other fuel assemblies 100.

The heat transfer features 320 may be provided as turbulence enhancers.

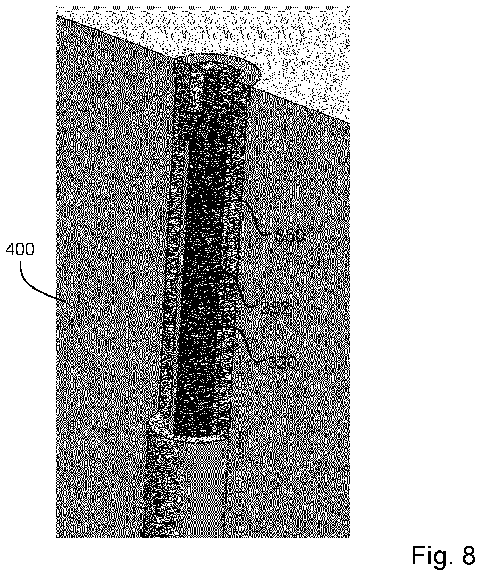

For example, the heat transfer features 320 may be provided as a roughened surface 350 of the displacer element 300. The roughened surface may comprise raised features (i.e. features which extend from the displacer element 300 into the annular coolant flow passage 230). For example the raised features may be provided as circumferential ribs 352 (as shown in figure 8). In other examples the roughened surface may comprise a spiral/screw rib which extends along the displacer element.

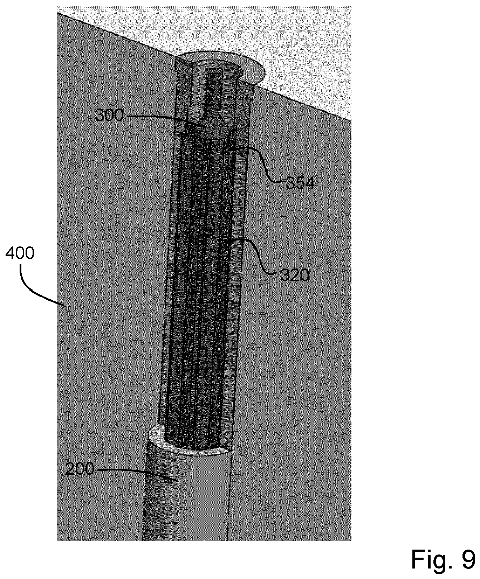

In further examples, the transfer features 320 may be provided as fins, pedestals, axially extending ribs and/or circumferentially extending ribs which extend from the main body 330 of the displacer element 300. Figure 9 illustrates an example in which the transfer features 320 are provided as axially extending fins 354.

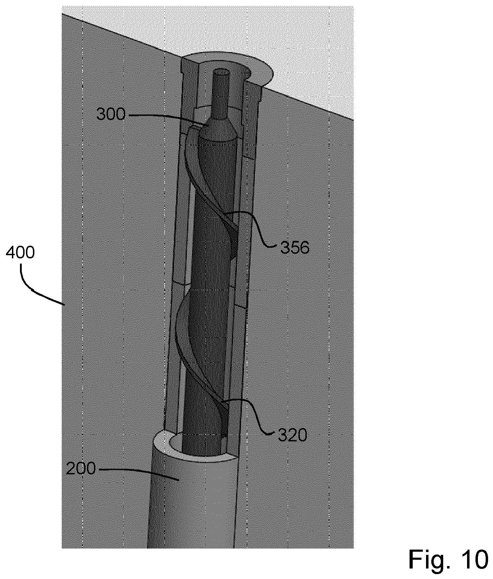

In a further example, as shown in figure 10, the heat transfer feature may be provided as a spiral continuous fin 356 along at least part of the length of the displacer element 300. Such an arrangement may increase flow turbulence and thereby improve heat transfer to the coolant.

In another example, the displacement element 300 may be shaped along its length to enhance turbulence. For example, the displacer element 300 may be provided as a helical element which extends along the flow passage 202.

At least one of the displacer elements 300 of the plurality of fuel assemblies 100 may comprise a first material with a first material property and each of the remainder of the displacer elements 300 of the plurality of fuel assemblies 100 comprise one of a second material, a third material or a fourth material each with different material properties, each of which are different to the first material and have different material properties to one another.

The first material may be a neutron moderator and multiplier, for example Beryllium oxide.

The second material may be a neutron moderator and absorber material. For example, the second material may comprise graphite, boron carbide and/or silicon carbide.

The third material may be transparent to neutrons. For example, the third material may comprise zirconium, zirconium hydride and/or a low neutron capture metals.

The fourth material may be a neutron poison. For example, the fourth material may comprise boron carbide particles and/or gadolinium oxide particles in a graphite matrix.

A method of optimising reactor core 600 performance using a fuel block 400 and fuel assembly 100 of the present disclosure may comprise a step of optimising the arrangement of fuel elements, fuel loading or moderation levels to ensure radially flat power profile of the fuel block (and hence the assembled reactor). Since the coolant channel is located within the fuel compacts (i.e. the fuel assembly) cooling therefore does not rely upon the fuel block as a heat transfer path. This allows the fuel assembly to be positioned anywhere within the fuel block to optimise the neutron moderation performance of the core 600 to offset the effects of neutron leakage.

Additionally or alternatively, the method may comprise accepting some degree of change in radial power in a fuel block and control the coolant flow through each fuel assembly to match the local power level. This may increase pressure drop and reducing heat transfer performance within low power areas (ie. at edge of the fuel block 400) due to a localised reduction in mass flow in these areas. In one example a flow restriction is added progressively along the coolant channel as the additional turbulence generated by any pressure drop also improves heat transport. In such an example balancing thermal loads is achieved by varying mass flow and heat transfer without the need for altering the surface text/profile of the displacer element.

Hence a fuel assembly 100 and/or nuclear fission reactor system 10 according to the present disclosure is configurable to ensure that power / heat transport from any part of the core 600 (e.g. fuel blocks) is the same across the exit of each fuel block (and hence a core 600 made from an assembly of fuel blocks).

Based on the teachings of the present disclosure, the fuel assembly 100 is optimised to control the local coolant flow and thereby match local coolant flow to the local power level such that all gas exiting the core 600 is approximately the same temperature. This is the crux of the idea and how it is novel in the field of core 600 design.

Thus coolant mass flow may be controlled by the addition and variation of the displacer elements 300. Hence heat output (and hence temperature profile of the core 600) may be controlled using flow control of coolant in addition to, or instead of, fuel loading.

The heat output from the fuel assembly can be adjusted by having varying mass flow rate of coolant through the fuel assembly and so some fuel assemblies (i.e. those at a higher temperature, for example at centre of fuel block 400) may have higher mass flow rate of coolant than others (i.e. those at a lower temperature, for example at the edge of the fuel block 400).

Additionally or alternatively, heat transfer to the coolant may be varied by controlling the thermal conduction to the coolant (e.g. to increase/decrease heat transfer to coolant) so some fuel assemblies (i.e. those at a higher temperature, for example at centre of fuel block 400) have higher heat transfer to coolant than others (i.e. those at a lower temperature, for example at the edge of the fuel block 400).

Additionally or alternatively, the material of the displacer element may be varied to vary the moderator function, so some fuel assemblies (i.e. those at a higher temperature, for example at centre of fuel block 400) generate less heat than others (i.e. those at a lower temperature, for example at the edge of the fuel block 400).

As set out above, the arrangement of the present disclosure employs annular fuel compacts 200 with a central coolant hole (flow passage 202) into which a displacer element 300 is placed. The addition of the displacer element 300 allows the coolant flow through the flow passage 202 to be optimised in each fuel element chamber 404 whilst improving the overall heat transfer performance of the fuel block 400 (and hence reactor core 600 formed by the fuel block 400). Hence the arrangement of the present disclosure may enable the ability to control coolant flow distribution whilst enhancing heat transfer performance.

By passing coolant through the centre of the fuel compact 200 without any support sleeve, the thermal resistance for heat flowing to the convective heat transfer surface is minimised. Hence with the configuration of the present disclosure, heat is transferred directly to the coolant from fuel compact.

Furthermore, housing the fuel compact 200 in a counter bored hole in the fuel block 400 removes the need for any additional support method for the fuel compacts 20 and ensures a good thermal contact between the fuel compact 200 and the fuel block 400. This thermal contact helps to transfer heat between fuel assemblies 100 further assisting in management of peaking powers and adds significant thermal inertia to the core 600 during transient events.

Also with the configuration of the present disclosure, balancing of gas flow, to optimise cooling rates, is significantly simpler and can be implemented on a per fuel assembly chamber 404 basis using various sizes of displacer elements 300.

The annular coolant flow passage 230 size can be optimised on all fuel assembly chambers 404 and positioned in the fuel block 400 to optimise pressure drop and heat transfer based on fuel block 400 profile.

Additionally, with the fuel compact 200 in close contact with the fuel block 400 the thermal resistance to remove decay heat is lower and the fuel block operates closer to the fuel temperature.

With the arrangement of the present disclosure, only fuel assembly chambers 404 need providing in the fuel block 400. That is to say, there is no need for separate coolant holes and fuel assembly holes as may be provided in examples of the related art, which enables a more compact fuel block 400 and hence a more compact nuclear fission reactor system. For example, a nuclear fission reactor system according to the present disclosure my be 30% smaller than examples of the related art.

A further significant advantage of the apparatus of the present disclosure is that temperature profile of a fuel block 400 may be adjusted by varying the materials and/or the geometry of the fuel assembly 100.

Hence a nuclear fission reactor system according to the present disclosure may comprise a plurality of fuel assemblies 100 which have the same external geometry, with some of the fuel assemblies having a feature and/or property which differs to another fuel assembly to give a different heat output performance from the fuel assembly location. Hence varying heat output performance from fuel assembly enables the fuel block, and hence a fuel core 600, to be configured to have an optimum temperature distribution.

The presented proposed new fuel block design offers potential to reduce fuel block manufacturing costs, significantly improve heat transport, and offer higher fuel loadings whilst providing equivalent coolant reactivity performance.

Additionally the arrangement of the present disclosure allows power density profile of the fuel block to be locked into the design during initial assembly to obtain optimum power flux. As such a reactor system would not need to refuel. There is a saving on maintenance costs as well as avoiding the need to transport fissionable material to and from the maintenance site.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A fuel assembly for a nuclear fission reactor, the fuel assembly centred on a longitudinal axis; the fuel assembly comprising:
a fuel compact which defines a flow passage running from a flow inlet provided at a first end of the fuel compact to a flow outlet provided at a second end of the fuel compact, and the flow passage defining an internal surface of the fuel compact;
a displacer element provided in the passage and mounted such that a clearance is maintained between the internal surface of the fuel compact and the displacer element to define an annular coolant flow passage.

2. A fuel assembly as claimed in claim 1 wherein a spacer element extends between the fuel compact and the displacer element to locate the displacer element relative to the fuel compact and maintain the clearance therebetween.

3. A fuel assembly as claimed in claim 1 or claim 2 wherein the spacer element is aerofoil shaped with a leading edge directed toward the flow inlet and a trailing edge directed toward a flow outlet.

4. A fuel assembly as claimed in claim 3 wherein a first spacer element array is provided at a first position (P1) along the length of the displacer element, the first spacer element array comprising at least two spacer elements spaced around the circumference of the displacer element; and
a second spacer element array is provided at a second position (P2) spaced apart along the length of the displacer element from the first spacer element array.

5. A fuel assembly as claimed in claim 3 or claim 4 wherein the first spacer element array is provided at the first end of the fuel compact, and each spacer element of the first spacer element array is located in a respective recess provided defined by the first end of the fuel compact; and the second spacer element array is provided at the second end of the fuel compact, and each spacer element of the second spacer element array is located in a respective recess defined by the second end of the fuel compact.

6. A fuel assembly as claimed in claim 5 wherein at least one of the spacer elements of each spacer element array extends beyond its respective end of the fuel compact.

7. A fuel assembly as claimed in any one of the preceding claims wherein the displacer element extends from a first end to a second end;
a first region extending from the displacer element first end to a second region, the first region having a constant first diameter;
the second region extending from the end of the first region, the second region increasing in diameter towards a third region;
the third region extending from the end of the second region to a fourth region, the third region having a constant third diameter;
the fourth region extending from the end of the third region, the fourth region decreasing in diameter towards a fifth region;
the fifth region extending from the end of the fourth region to the displacer element second end, the fifth region having a constant fifth diameter.

8. A fuel assembly as claimed in claim 7 wherein the spacer elements of the first spacer element array extend along the second region; and the spacer elements of the second spacer element array extend along the fourth region.

9. A nuclear fission reactor system comprising a nuclear reactor unit having a fuel block with a central axis extending along the length of the fuel block; the fuel block defining a fuel assembly chamber which extends from an inlet opening on a first surface of the fuel block to an outlet opening on a second surface of the fuel block; wherein the fuel assembly chamber inlet is operable to be in flow communication with a coolant source, and the fuel assembly chamber flow outlet is operable to be in flow communication with a coolant exhaust; and a fuel assembly as claimed in any one of claims 1 to 8 is provided in the fuel element chamber.

10. A nuclear fission reactor system as claimed in claim 9 wherein the fuel assembly chamber extends from the fuel assembly chamber inlet with a diameter such that there is provided a sliding fit between the fuel assembly and the fuel assembly chamber; the fuel assembly chamber reduces in diameter towards the fuel assembly chamber outlet such that diameter of the fuel assembly chamber flow outlet is less than the diameter of the fuel assembly to thereby prevent the fuel assembly from passing through the fuel assembly chamber flow outlet.

11. A nuclear fission reactor system as claimed in claim 10 when dependent on claim 6 wherein a shoulder defines the reduction in diameter of the fuel assembly chamber, and the spacer elements engage with the shoulder.

12. A nuclear fission reactor system as claimed in any one of claims 9 to 11 wherein a retaining plug is provided in the fuel assembly chamber inlet, the retaining plug defining part a plug flow passage therethrough with a diameter less than the diameter of the fuel assembly to thereby prevent the fuel assembly from passing through the retaining plug.

13. A nuclear fission reactor system as claimed in claim 12 when dependent on claim 6 wherein the spacer elements engage with the retaining plug.

14. A nuclear fission reactor system as claimed in any one of claim 9 to 13 wherein the fuel block defines a plurality of fuel assembly chambers, a fuel assembly provided in each of the fuel assembly chambers, and the annular coolant flow passage of one of the fuel assemblies has a different flow area to the annular coolant flow passage of at least one of the other fuel assemblies.

15. A powerplant for land, air or sea comprising a nuclear fission reactor system as claimed in any one of claims 9 to 14.
